(19) Europäisches Patentamt
European Patent Office
Office européen des brevets

(11) **EP 4 730 285 A1**

(12) **EUROPEAN PATENT APPLICATION**

(43) Date of publication:
**22.04.2026 Bulletin 2026/17**

(21) Application number: **25199103.0**

(22) Date of filing: **29.08.2025**

(51) International Patent Classification (IPC):
***G06V 40/20*** *(2022.01)*

(52) Cooperative Patent Classification (CPC):
**G06V 40/20;** G06V 40/23

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.10.2024 JP 2024184924**

(71) Applicant: **KONICA MINOLTA, INC.**
**Tokyo 100-7015 (JP)**

(72) Inventors:
• **SAKATA, Mami**
**100-7015 Tokyo (JP)**
• **YOSHIZAWA, Masanori**
**100-7015 Tokyo (JP)**
• **SONE, Shingo**
**100-7015 Tokyo (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING SYSTEM FOR EVALUATING CLEANING WORK**

(57) An information processing system includes an imager that captures an image of a predetermined monitoring area, a detector that detects a person and a cleaning member from a video captured by the imager, and a determiner that determines, based on a plurality of body areas set according to a size of the person detected by the detector and a position of the cleaning member within the body areas, an order of cleaning work performed by the person and a cleaning degree.

FIG. 5A REFERENCE SIZE (r=1.0)

FIG. 5B LARGE SIZE (r=1.1, AREA s2=1.21×s0)

EP 4 730 285 A1

**Description**

CROSS-REFERENCE TO RELATED APPLICATION

The entire disclosure of Japanese patent application No. 2024-184924, filed on October 21, 2024, is incorporated herein by reference in its entirety.

Background of the Invention

1. Technical Field

The present invention relates to an information processing system. In particular, the present invention relates to an information processing system for evaluating cleaning work performed by a worker themselves when entering a cleanroom.

2. Description of Related art

In order to remove foreign substances adhering to a worker themselves and work clothes such as dustproof clothes of the worker, cleaning work using a cleaning tool has conventionally been performed at the entrance of a cleanroom with a high level of cleanliness, such as those in food factories and precision equipment manufacturing plants. An information processing apparatus disclosed in Japanese Unexamined Patent Publication No. 2021-152758 captures an image of a worker by an imager, and extracts joint positions of the worker based on the captured image. Furthermore, the information processing system detects a sanitary tool carried by the worker and recognizes the execution of the sanitary work using the sanitary tool performed by the worker. Then, the information processing system identifies the body part on which the sanitary work is being performed, based on the joint positions and the position of the sanitary tool when the execution of the sanitary work is recognized. In addition, when the sanitary work time for each body part exceeds the work completion time set for each body part, it is determined that the work for each body part is completed.

In addition, in a cleanliness level management method for a person who enters a cleanroom that is disclosed in Japanese Unexamined Patent Publication No. 2018-005464, a person region of a subject and a region of a roller held by the subject are extracted based on a background difference obtained by comparing an acquired image including the subject captured in an inspection room with a background image. In addition, by acquiring and analyzing the relative movement of the roller with respect to each body part in the person region using optical flow, it is determined whether or not the rolling is performed appropriately.

Summary of the Invention

However, in the technique disclosed in Japanese Unexamined Patent Publication No. 2021-152758, the work completion is determined when the work time for the body part on which the cleaning work is performed exceeds the set work completion time (determination criterion). The work completion time is uniform regardless of workers, and the physique of the worker is not taken into consideration. Thus, for example, when the worker has a large physique, the size of the body part to be cleaned is large, and the cleaning work may be insufficient even if the worker performs the cleaning work for the same amount of time as a worker having a smaller physique. In addition, the same applies to the technique disclosed in Japanese Unexamined Patent Publication No. 2018-005464, and in the technique disclosed in Japanese Unexamined Patent Publication No. 2018-005464, determination of rubbing during the rolling is performed for each divided region, and it is determined whether or not the rolling is suitably completed for each part according to the number of times of rubbing. Also in this case, for example, when the worker has a large physique, the size of the body part to be cleaned is large, and the cleaning work may be insufficient even if the worker performs the cleaning work for the same amount of time as a worker having a smaller physique.

The present invention has been made in order to solve the above-described issue, and an object of the present invention is to provide an information processing system capable of appropriately determining, in consideration of a body size of a worker, whether cleaning work is being appropriately performed by the worker.

To achieve at least one of the abovementioned objects, according to an aspect of the present invention, a system reflecting one aspect of the present inventions comprises the followings.

An information processing system including:

an imager that captures an image of a predetermined monitoring area;
a detector that detects a person and a cleaning member from a video captured by the imager; and
a determiner that determines, based on a plurality of body areas set according to a size of the person detected by the detector and a position of the cleaning member within the body areas, an order of cleaning work performed by the person and a cleaning degree.

Brief Description of the Drawings

Advantages and features provided by one or more embodiments of the present invention will be fully understood in conjunction with the following detailed description and the accompanying drawings. However, these are for purposes of illustration only and are not intended to limit the present invention.

Fig. 1 is an overall block diagram illustrating a configuration of an information processing system according to the present embodiment;

Fig. 2 is a schematic diagram illustrating a worker in a monitoring area;

Fig. 3 is a functional block diagram illustrating functions of controllers;

Fig. 4A is a schematic diagram illustrating an example of the video data obtained through imaging; Fig. 4B is a schematic diagram illustrating skeleton information detected from the video data;

Fig. 5A is a schematic diagram illustrating set body areas;

Fig. 5B is a schematic diagram illustrating set body areas;

Fig. 6A is a diagram illustrating movement when cleaning an upper body;

Fig. 6B is a diagram illustrating movement when cleaning a lower body;

Fig. 7 is a schematic diagram for explaining an identification process 1 of a cleaning member;

Fig. 8 is a schematic diagram for explaining an identification process 2 of the cleaning member;

Fig. 9 is a schematic diagram illustrating a relationship between a position of the cleaning member and an identified cleaning part;

Fig. 10 illustrates an example of time-series data;

Fig. 11 is a flowchart illustrating a determination process of a cleaning order and a cleaning degree executed by the information processing system;

Fig. 12 is a subroutine flowchart illustrating a process of step S08 in Fig. 11;

Fig. 13 is a diagram illustrating a state transition model used for determination of the cleaning order;

Fig. 14A is a subroutine flowchart illustrating a process of step S20 in Fig. 12;

Fig. 14B is a diagram illustrating the time-series date in which label transitions are recorded;

Fig. 14C illustrates data in which Ranges for each label in the time-series date of Fig. 14B is output;

Fig. 15 illustrates an example of an evaluation result of the cleaning order;

Fig. 16 is a subroutine flowchart illustrating a process of step S09 in Fig. 11;

Fig. 17 illustrates an example of an evaluation result of the cleaning degree;

Fig. 18A is a schematic diagram illustrating an example of a display image;

Fig. 18B is a schematic diagram illustrating an example of a display image;

Fig. 18C is a schematic diagram illustrating an example of a display image; and

Fig. 18D is a schematic diagram illustrating an example of a display image.

Detailed Description

Hereinafter, an embodiment of the present invention will be described with reference to the accompanying drawings. However, the scope of the present invention is not limited to the disclosed embodiment. Note that in the description of the drawings, the same components are denoted by the same reference signs, and redundant descriptions are omitted. In addition, dimensional ratios in the drawings are exaggerated for convenience of explanation and may be different from actual ratios.

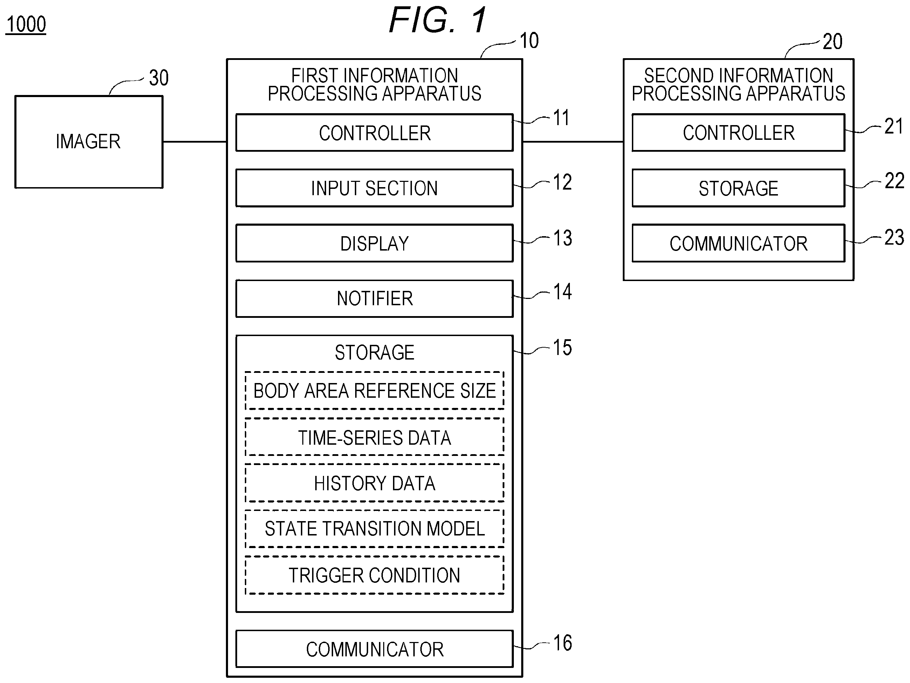

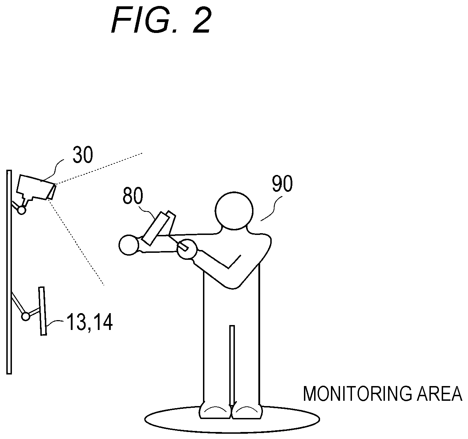

Fig. 1 is an overall block diagram illustrating a configuration of an information processing system 1000 according to the present embodiment. Fig. 2 is a schematic diagram illustrating a person who performs cleaning in a monitoring area. The information processing system 1000 includes a first information processing apparatus 10, a second information processing apparatus 20, and an imager 30. These apparatuses are communicatively connected to each other. The first information processing apparatus 10 and the second information processing apparatus 20 are each a personal computer (PC) or a server (on-premises server or cloud server). For example, the first information processing apparatus 10 is a PC or an edge server, and the second information processing apparatus 20 is a cloud server. The imager 30 is a camera or an apparatus including a camera. The camera includes an imaging element and an optical element.

As illustrated in Fig. 2, the imager 30 is fixedly arranged on a wall surface or the like so as to capture an image of a predetermined monitoring area. The optical axis of the imager 30 may be arranged to be horizontal or may be arranged with a slight downward inclination (within a range of 1 to 45 degrees). The imager 30 starts and ends imaging under the control of the first information processing apparatus 10. A color or black-and-white video is output through the imaging by the imager 30. The imager 30 captures a video (moving image) including a plurality of temporally consecutive captured images (frames) at a frame rate from 10fps to 60fps (time-series video data). The video data obtained through imaging is transmitted to the first information processing apparatus 10. For example, the time-series video data at 30fps is output from the imager 30.

The monitoring area is, for example, an anteroom of a food manufacturing line, a precision equipment manufacturing line, or the like (hereinafter, simply referred to as a manufacturing line). The floor surface of the monitoring area is marked, and a worker 90 who performs cleaning (hereinafter, simply referred to as worker) is designated to stand at the marked position to perform the cleaning work at the time of the cleaning work on their own body. The worker 90 is instructed to stand in front of, or slightly angled toward the front of the camera of the imager 30 in the monitoring area. Furthermore, when cleaning their back, the worker 90 is instructed to set the cleaning position such that it is directed toward the camera side. A fixed camera is used and a subject (worker) stands at the same position, so that the angle of view (viewing angle) and the imaging distance (distance to the subject) remain constant.

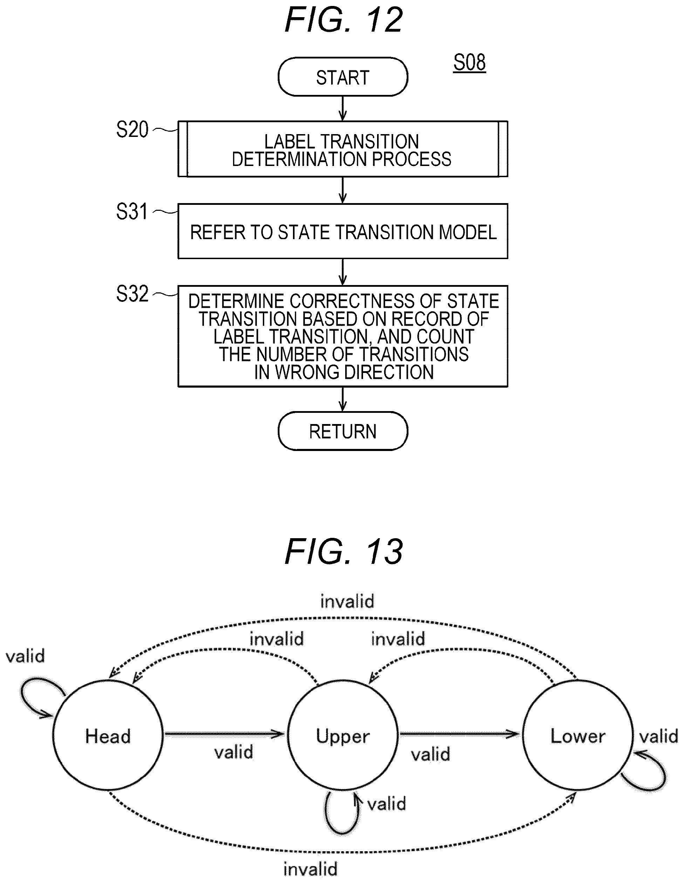

The cleaning work refers to the work in which a worker cleans their own body using a cleaning member. More specifically, the cleaning work refers to the work in which a worker uses a cleaning member 80, such as a rotating roller with adhesive tape and an attached handle, and moves the cleaning member 80 back and forth over their work clothes while bringing the cleaning member 80 into contact with the body to remove foreign substances, such as fibers, dust, and hair adhering to the body surface. The worker 90 sequentially cleans the entire body from head to toe, following the cleaning order from the upper to the lower, according to a manual. In addition, a state transition model (see Fig. 13 to be described below) is described in accordance with the cleaning order described in the manual.

(First Information Processing Apparatus 10)

Referring to Fig. 1, the first information processing apparatus 10 includes a controller 11, an input section 12, a display 13, a notifier 14, a storage 15, and a communicator 16. These constituent elements are electrically connected to each other, but the description of the connection relation is omitted in Fig. 1.

The controller 11 includes a CPU, a GPU, a RAM, a ROM, and the like. The input section 12, which includes a keyboard, a mouse, or a touch screen, is used by a user to input instructions and change various settings. The display 13, which includes a display such as an LCD, displays a display screen (Graphical User Interface (GUI)) used for various inputs. The notifier 14 is implemented with a speaker or a buzzer. In addition, the display 13 and the notifier 14 may be visibly installed near the monitoring area so that the worker 90 can receive feedback on the cleaning status during their cleaning work.

The storage 15 includes an SSD or an HDD. The storage 15 stores a body area reference size, time-series data, history data, a state transition model, a trigger condition, and the like. These will be described below. The communicator 16 is implemented with an interface circuit (for example, a LAN card) for communicating with an external device, such as the second information processing apparatus 20, via a network.

(Second Information Processing Apparatus 20)

The second information processing apparatus 20 includes a controller 21, a storage 22, and a communicator 23. These constituent elements are electrically connected to each other, but the description of the connection relation is omitted in Fig. 1. The hardware configurations of the controller 21, the storage 22, and the communicator 23 correspond to the controller 11, the storage 15, and the communicator 16, respectively; hence, descriptions thereof are omitted.

(Controller 11 and Controller 21)

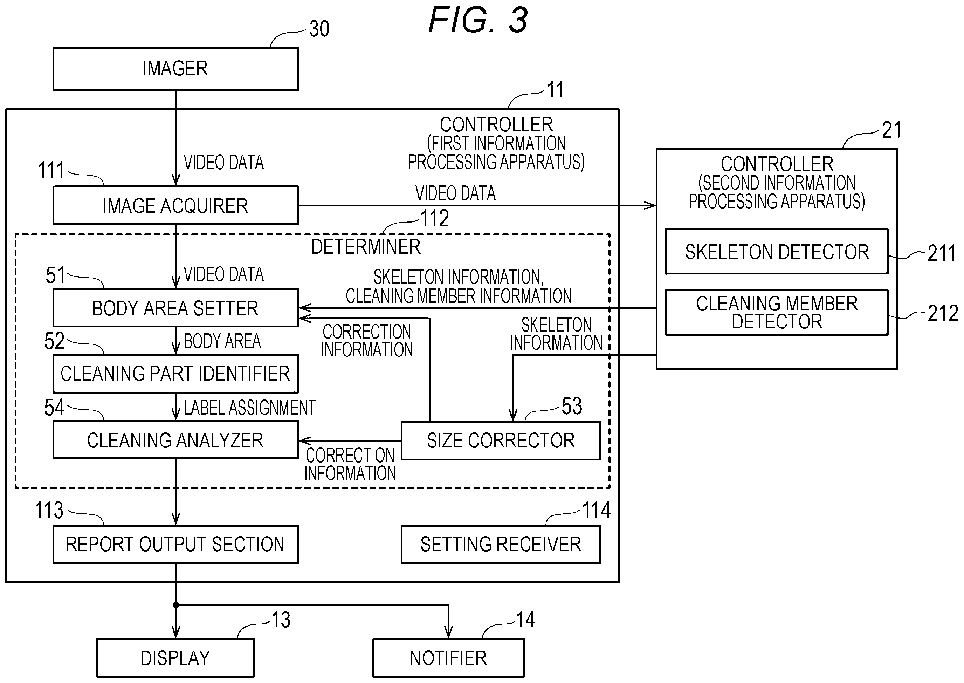

Fig. 3 is a functional block diagram illustrating functions of the controllers 11 and 21. The controller 11 cooperates with the communicator 16 to function as an image acquirer 111 and a report output section 113. In addition, the controller 11 cooperates with the input section 12 and the display 13 to function as a setting receiver 114. In addition, the controller 11 cooperates with the controller 21 of the second information processing apparatus 20 to function as a determiner 112. The determiner 112 functions as a body area setter 51, a cleaning part identifier 52, a size corrector 53, and a cleaning analyzer 54, as sub-functions. The controller 21 functions as a skeleton detector 211 and a cleaning member detector 212.

(Image acquirer 111)

The image acquirer 111 acquires video data from the imager 30. The video data is transmitted to the controller 21 and the body area setter 51 of the determiner 112. In this case, preprocessing may be performed on the video data by the image acquirer 111 before the video data is transmitted to respective functional component. The preprocessing includes, for example, convolution integral (smoothing, sharpening), gradation correction using a one-dimensional lookup table, and the like.

(Determiner 112)

The determiner 112 determines the order of the cleaning work performed by a person and the cleaning degree, based on a plurality of the body areas and a position of the cleaning member within the body areas. Details of functions of the determiner 112 will be described below.

(Report Output Section 113)

The report output section 113 reports a determination result determined by the determiner 112 to a user such as the worker or an administrator who manages the worker via the display 13 or the notifier 14.

(Setting Receiver 114)

The setting receiver 114 receives setting changes by the user, such as the body area reference size, the arrangement position of the body area, the state transition model, the trigger condition, and the threshold value for the cleaning completion determination.

(Skeleton Detector 211)

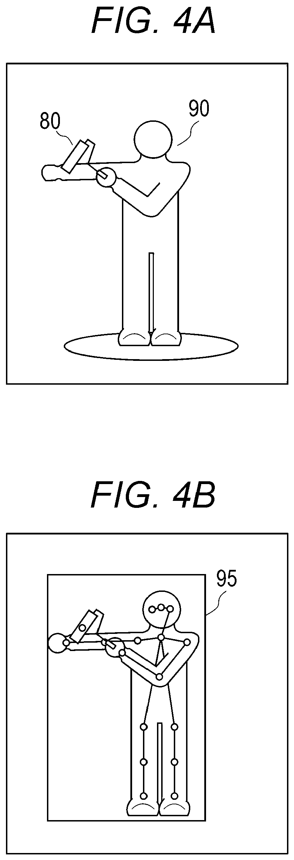

The skeleton detector 211 analyzes the images transmitted from the image acquirer 111 and detects (estimates) skeleton information of a person included in the video data. The skeleton information may include position information of a plurality of joint points such as an eye, nose, neck, shoulder, elbow, wrist, waist, knee, and ankle, which are skeleton feature points (key joint points) of a person, and line segments connecting joint points. Fig. 4A is a schematic diagram illustrating an example of the video data obtained through imaging. Fig. 4B is a schematic diagram illustrating the skeleton information detected by the skeleton detector 211 from the video data. The position information of the joint points may be coordinates (X coordinate and Y coordinate) of the joint points on the captured image. Note that in the drawings herein, descriptions of some joint points may be omitted for convenience of illustration.

For example, the skeleton detector 211 estimates the skeleton information using a trained model for detecting, from a rectangle 95 including a person (hereinafter, also referred to as a "person rectangle"), joint points of the person. The person rectangle 95 refers to a region encompassing joint points and nodes of the person in the image. As such trained models, for example, models such as OpenPose (https://arxiv.org/abs/1812.08008), DeepPose (https://arxiv.org/abs/1312.4659), and the like are known. The trained model is stored in the storage 22. The skeleton information includes, along with the plurality of joint points of a person, reliability (which is a score of credibility of estimation and is also referred to as likelihood) for each joint point. In the present embodiment, it is desirable to use the joint points with reliability not less than a predetermined threshold value. This is because, due to the nature of machine learning, low reliability increases the possibility that a correct detection result will not be obtained. The skeleton detector 211 outputs the skeleton information to the body area setter 51 and the size corrector 53.

(Setting of Position and Size of Body Area)

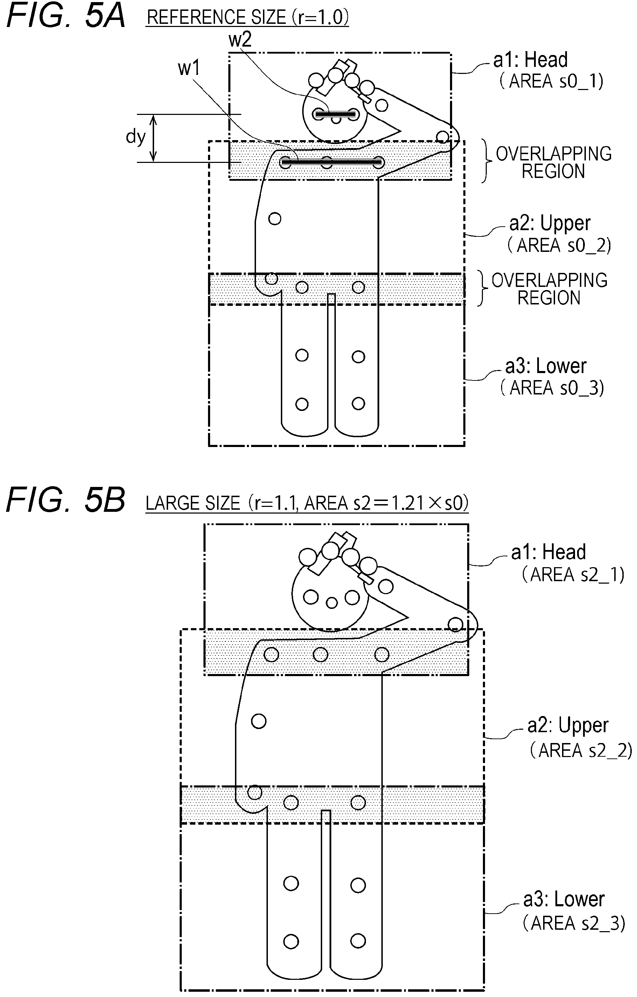

Fig. 5A and Fig. 5B are schematic diagrams illustrating the body areas set according to the size and physique of the person (worker 90). The body area setter 51 sets the plurality of body areas corresponding to the body parts determined from the specific pieces of the skeleton information among the skeleton information of the worker 90, and sets the position, size, and inclination of each body area. In the example illustrated in Fig. 5A, three body areas a1 to a3 (also referred to as "Head", "Upper", and "Lower", respectively) are set. The body areas a1 to a3 each have a rectangular shape.

(Body Area a1: Head)

(Arrangement position: XY coordinate position)

The coordinates of the body area a1 in the lateral direction (horizontal direction, X direction) and in the longitudinal direction (vertical direction, Y direction) are set such that the center of the body area a1 is located at the position of the joint point of "nose".

(Size)

As to be described below, the size corrector 53 calculates the correction coefficients r11 to r32, which are correction information, using the position information of predetermined combinations of the joint points or distance information between the joint points from the skeleton information received from the skeleton detector 211, and passes them to the body area setter 51. The body area setter 51 adjusts or changes the size of the body areas using the correct information.

The horizontal width of the body area a1 of the rectangle (bounding box) is set by the following expression.

$$\text{Rectangle horizontal width} = \text{correction coefficient } r11 \times \text{reference rectangle width } sw$$

(Expression 1)

Here, Correction coefficient r11 = (shoulder width w1 + eye width w2)/(reference shoulder width ws1 + reference eye width ws2) is defined. As the shoulder width w1, the distance (x coordinates) between the joint points of the left shoulder and the right shoulder is used. As the eye width w2, the distance between the joint points of the right eye and the left eye is used. As each of the reference shoulder width ws1 and the reference eye width ws2, an average value of a plurality of users or a value of a worker having a reference size based on the position information of the same joint points, is used. In addition, the reference rectangle width sw is set in advance and is stored in the storage 15 as the body area reference size.

The height (vertical width) of the body area a1 which is rectangular is set by the following expression.

$$\text{Rectangle height} = \text{correction coefficient } r12 \times \text{reference rectangle height } sh$$

(Expression 2)

Here, Correction coefficient r12 = difference dy/reference difference dsy is defined. Each of the differences dy and dsy is a difference between the average height (y coordinates) of the joint points of the right and left shoulders, and the average height of the joint points of the right and left eyes. As the reference difference dsy, an average value of a plurality of users or a value of a worker having a reference size based on the position information of the same joint points, is used. In addition, the reference rectangle height sh is set in advance and is stored in the storage 15 as the body area reference size.

The user may be able to set, through the setting receiver 114, the reference rectangle width sw, the reference rectangle height sh, and the arrangement position with respect to the positions in the skeleton information of each body area. In this case, the setting receiver 114 functions as a first receiver.

(Inclination)

The body area a1 is inclined according to the average values of the inclination of the shoulders and eyes (difference angle from the horizontal line).

(Body Area a2 and a3)

For each of the body areas a2 and a3, the XY coordinate position, size, and inclination of the rectangle are set through similar processes. More specifically, in the body area a2 (Upper), the position, size, and inclination are set based on the position information of the joint points of the left and right shoulders and the joint points of the left and right waists. For example, in the body area a2, the XY coordinate position is set based on the centroid of the four joint points of the right and left shoulders and the right and left waists, the correction coefficient r21 and the correction coefficient r22 are calculated based on the widths and the heights (y coordinate differences) by these joint points, and the size is set using these coefficients. Furthermore, the inclination is set by these joint points. Similarly, in the body area a3 (Lower), the XY coordinate position is also set based on the coordinates of four joint points of the right and left waists and the right and left ankles. The correction coefficient r31 and the correction coefficient r32 are calculated based on the coordinates of the four joint points, and the size is set using these coefficients. Furthermore, the inclination is set by these joint points.

(Area s0 of Reference Body Area and Area s2 of Size-Corrected Body Area)

Fig. 5A illustrates the body areas a1 to a3 set for the worker having the physique of the reference size. That is, Fig. 5A illustrates the body areas a1 to a3 in a case where the shoulder width w1, the eye width w2, and the like are the same as the reference widths, and the correction coefficients r11 to r31 (hereinafter, also collectively referred to as correction coefficient r) are all 1.0. In this case, the areas of the body areas a1 to a3 are denoted as areas s0_1, s0_2, and s0_3, respectively (hereinafter, these are also collectively referred to as area s0). Fig. 5B illustrates the body areas a1 to a3 set for the worker 90 having a larger physique than the reference size; for example, when positional relationships in the skeleton information are all 10% larger or longer, that is r = 1.1. Compared with Fig. 5A, in the example illustrated in Fig. 5B, the size of each of the body areas a1 to a3 is set to a size 10% larger in the vertical and horizontal lengths, according to the physique of the worker. In this case, the areas of the body areas a1 to a3 are denoted as areas s2_1, s2_2, and s2_3, respectively (hereinafter, also collectively referred to as area s2). In this case, in the example of correction coefficient r = 1.1, Area $s2 = 1.1^2 \times s0$ is defined.

(Overlapping Region)

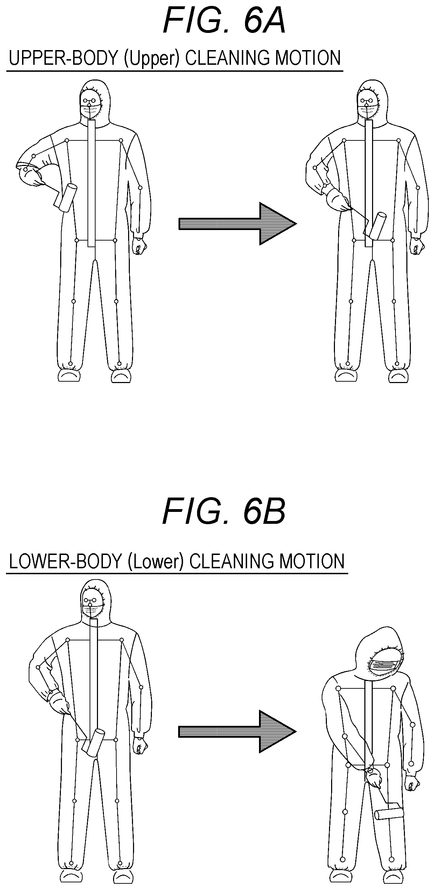

Fig. 6A is a diagram illustrating an example of an upper-body cleaning motion. Fig. 6B is a diagram illustrating an example of a lower-body cleaning motion. In the upper-body cleaning motion illustrated in Fig. 6A, the worker rolls the cleaning member from the abdomen to the waist. In the lower-body cleaning motion illustrated in Fig. 6B, the worker rolls the cleaning member from the waist to the knees. Thus, adjacent body parts share a common rolling area. According to the examples illustrated in Fig. 6A and Fig. 6B, the cleaning member enters the area around the waist in both the upper-body and lower-body cleaning motions. In view of these findings, in the present embodiment, in order to prevent false determination of the cleaning position and the cleaning order, the adjacent body areas are made to overlap in the body areas a1 to a3. For example, in a case where the waist is set to the lower-body area without the overlap, entry of the cleaning member into the waist during the upper-body cleaning motion of Fig. 6A is determined to be a shift from the upper body to the lower body, thereby increasing the possibility that the cleaning order is determined to be different from the intended order. In order to prevent such a situation, in the present embodiment, the adjacent body areas are made to overlap in the body areas a1 to a3.

(Cleaning Member Detector 212)

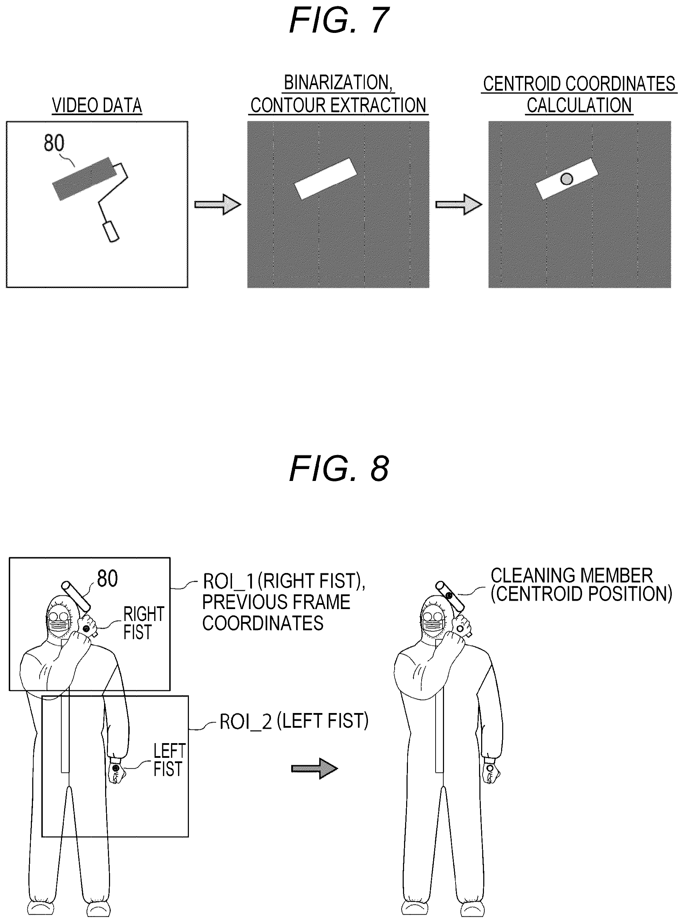

The cleaning member detector 212 detects the position of the cleaning member 80 from the video data through the following identification processes 1 and 2. Fig. 7 is a schematic diagram for explaining the identification process 1. The identification process 1 is a method used when a high lightness difference or chromaticity difference exists between the work clothes of the worker 90 and the cleaning member 80. For example, the identification process 1 is used in a case where the work clothes are white and the cleaning member 80 uses adhesive tape of a color having low lightness other than white, for example, black. The cleaning member detector 212 detects a region of the cleaning member 80 (particularly, the adhesive tape) through image processing such as binarization and contour extraction on the acquired video data. At this time, the shape and size of the cleaning member 80 may be registered, and the cleaning member detector 212 may detect the cleaning member using pattern matching. Then, the centroid of the detected region is calculated. The cleaning member detector 212 transmits the detected centroid position, as the position of the cleaning member 80, to the determiner 112.
Fig. 8 is a schematic diagram for explaining the identification process 2. The identification process 2 is performed in conjunction with the identification process 1. The cleaning member detector 212 uses the skeleton information detected by the skeleton detector 211 to estimate the position of the right fist from the vector between the right elbow and right wrist, and the position of the left fist from the vector between the left elbow and left wrist.

Then, the ROI (Region of Interest) is set around: (1) the position of the right fist; (2) the position of the left fist; and (3) the coordinate position of the cleaning member extracted in the previous frame.

Next, the cleaning member detector 212 performs binarization in a search manner on the three ROIs in the order of (1), (2), and (3), through the identification process 1 to calculate the centroid position.

Then, the cleaning member detector 212 estimates the closest object to the position coordinates of the cleaning member 80 in the previous frame, as the cleaning member 80.

(Determination of Entry of Cleaning Member into Body Area)

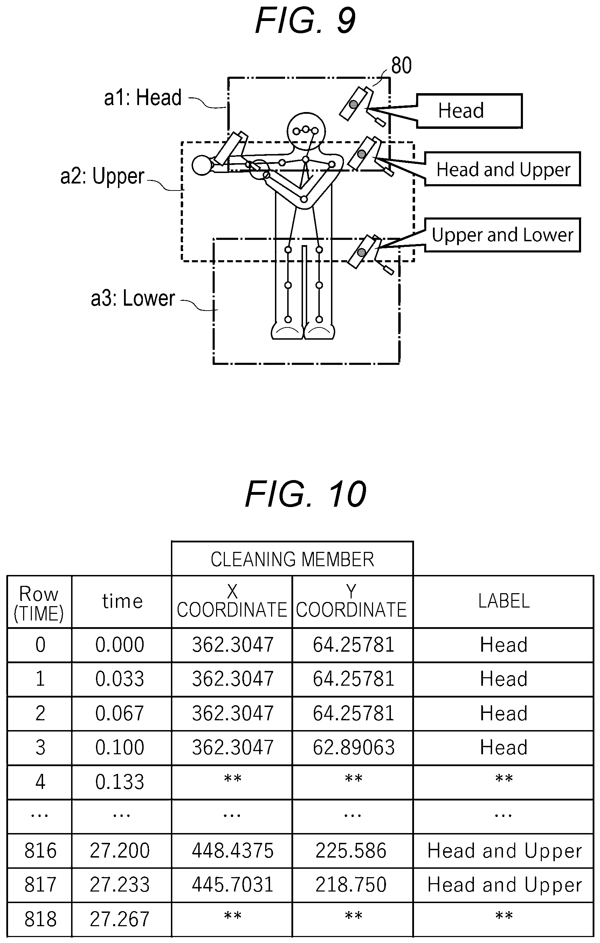

Hereinafter, determination of entry of the cleaning member into the body area will be described with reference to Fig. 9 and Fig. 10. Fig. 9 is a schematic diagram illustrating the relationship between the position of the cleaning member and the cleaning part identified thereby, and Fig. 10 illustrates an example of the time-series data. The time-series data refers to data in which the position information of the cleaning member, classification results of the body areas, and timestamps, which are to be described below, are associated with each other. In the time-series data, the cleaning times (dwell times) and the movement trajectories of the cleaning member within the body areas are described. The cleaning part identifier 52 (see Fig. 3) determines, according to the position information of the cleaning member 80 (centroid position) detected by the cleaning member detector 212 and the regions of the plurality of body areas a1 to a3 set by the body area setter 51, in which body area the cleaning member 80 is located. Then, the data is labeled according to the determination result and recorded as the time-series data (data frame).

As illustrated in Fig. 9 and Fig. 10, when the position of the cleaning member 80 is in any of the body areas a1 to a3, the label of each of the body areas a1 to a3 is assigned. For example, when the cleaning member 80 is in the body area a1, the label "Head" is assigned to the time-series data. In addition, when the cleaning member 80 is located in the overlapping region, the label of the plurality of body areas are assigned. For example, when the cleaning member 80 is located in the area where the body areas a1 and a2 overlap, the label "Head&Upper"" is assigned. In addition, the label "NaN" is assigned in a case of absence in any of the body areas. The example illustrated in Fig. 10 indicates that the label is assigned to each frame at 30fps.

(Determination Process of Cleaning Order and Cleaning Degree)

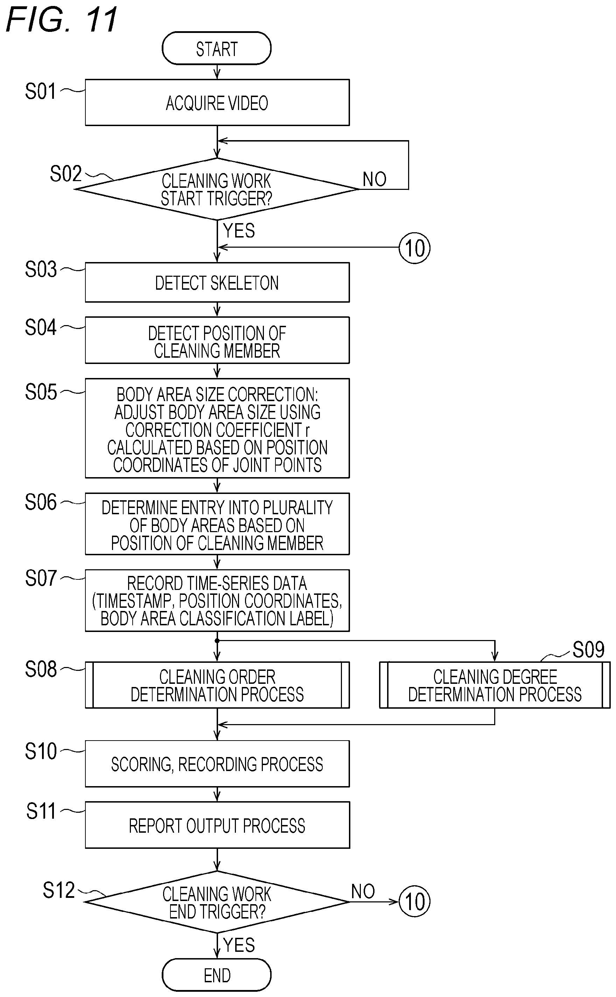

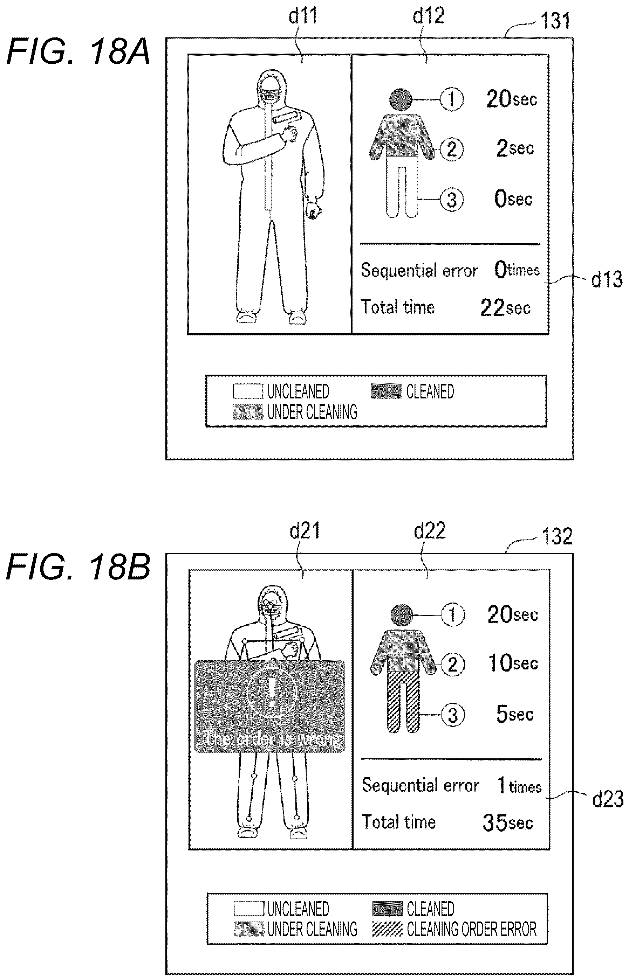

Next, with reference to Fig. 11 to Fig. 18D, a determination process of the cleaning order and the cleaning degree, executed by the information processing system 1000, will be described. Fig. 11 is a flowchart illustrating the determination process of the cleaning order and the cleaning degree.

(Steps S01 and S02)

The image acquirer 111 acquires the video data of the monitoring area captured by the imager 30.

When a cleaning work start trigger is input (YES), the controller 11 advances the process to step S03. The trigger conditions for the start and the end of the cleaning work are stored in the storage 15. For example, specific gestures are stored in the storage 15 as the trigger conditions corresponding to the respective start and end of the cleaning work. When the controller 11 detects a specific gesture based on the skeleton information detected by the skeleton detector 211, the trigger condition is considered satisfied, and the controller 11 determines the start of the cleaning work. For example, the gestures includes a specific posture in which the cleaning member 80 is held over the head, as illustrated in Fig. 5A. Furthermore, the trigger conditions for the respective start and end gestures may be changed by the user through the setting receiver 114. For example, the setting may be changed so that a motion of shaking the cleaning member 80, held in the left hand, to the right and left over the head serves as the trigger condition. In addition, the trigger condition is not limited thereto, and a posture in which a worker stands still at a designated position within the monitoring area may serve as the trigger condition corresponding to the start or the end. Alternatively, as another example, the trigger condition may be activated by pressing a button arranged in the vicinity of the monitoring area or by holding an IC chip attached to a hand or wrist over a non-contact proximity sensor arranged in the vicinity. In addition, a worker ID may be identified by holding the IC chip over the sensor. Furthermore, in this case, the cleaning work may be started a predetermined time after, or ended retroactively a predetermined time before the button is pressed or the hand or the IC chip is held over the proximity sensor. For example, the cleaning work is started 5 seconds after the button is pressed. As another example, the cleaning work is ended three seconds before the button is pressed (in this case, the determination result of cleaning for the preceding three seconds is discarded).

(Steps S03 and S04)

The skeleton detector 211 detects the skeleton information from the video data. In addition, the cleaning member detector 212 detects the position information of the cleaning member from the video data. These processes are as described above.

(Step S05)

The size corrector 53 calculates the correction coefficient r using the position information of a predetermined combination of joint points among the skeleton information. Then, the body area setter 51 changes the sizes of the body areas a1 to a3 from the body area reference size, using the correction coefficient r. Then, the body area setter 51 arranges each of the size-corrected body areas a1 to a3 at the position and with the inclination identified using the position information of the joint points. The process herein is as described with reference to Figs. 5A and 5B.

(Steps S06 and S07)

The cleaning part identifier 52 determines the entry of the cleaning member 80 into at least any of the body areas a1 to a3 based on the position of the cleaning member 80 (centroid position) identified by the cleaning member detector 212 and the region information (sizes, positions, and inclinations) of the body areas a1 to a3 set in step S05. The determination result is assigned as a label to the time-series data and recorded (see Fig. 10).

(Steps S08 and S09)

The cleaning analyzer 54 executes the cleaning order determination process (step S08) and the cleaning degree determination process (step S09) using the time-series data recorded through the processes described above. First, the process of step 08 will be described, and then the process of step S09 will be described.

(S08: Cleaning order determination process)

Hereinafter, the cleaning order determination process will be described with reference to Figs. 12 to 14C.
Fig. 12 is a subroutine flowchart illustrating the process of step S08. Fig. 13 is an example of the state transition model. The state transition model is stored in the storage 15. In addition, in the state transition model, it may be possible for the user to change the setting for correctness determination for a transition direction between states through the setting receiver 114. In this case, the setting receiver 114 functions as a second receiver.

(Step S20)

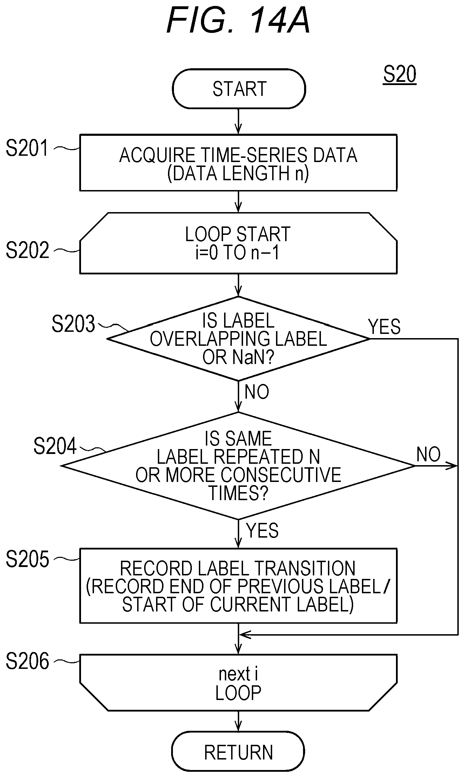

First, a label transition determination process is performed. Fig. 14A is a subroutine flowchart illustrating the process of step S20.

(Step S201)

The cleaning analyzer 54 acquires the time-series data. The data length n here corresponds to the number of frames of the time-series data. For example, the data length n is 2300.

(Steps S202 to S206)

Steps S202 to S206 constitute loop processing. The initial value i = 0, and the end value is N-1.
In step S203, when the label of acquired data i is an overlapping label indicating an overlapping range between the body areas, that is, "Head&Upper" or "Upper&Lower", or is NaN (null), the following processes are skipped. Then, in step S206, the label for the next data i + 1 is acquired, and the processes starting from step S202 are executed. Otherwise, that is, when the label is any of "Head", "Upper", and "Lower", the process is advanced to step S204.
In step S204, when the same label is repeated N or more consecutive times (YES), a state transition is detected, and the process is advanced to step S205. Here, the same label refers to any other label than the overlapping labels or the NaN label, that is, any label of "Head", "Upper", and "Lower", that is repeated N or more consecutive times. N is an integer value set in advance, and is set to any value from two to nineteen. For example, N = 3 is defined. On the other hand, when the current label is different from the previous label (i - 1), or when the number of consecutive times of the same label is less than N, the process is skipped.

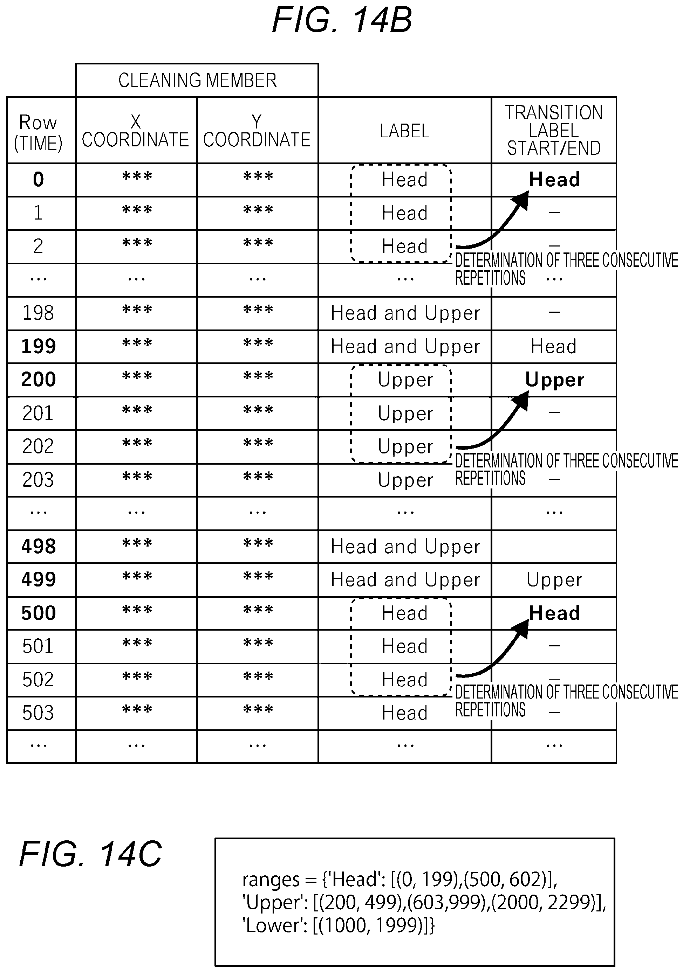

In step S205, the label transition is recorded. Fig. 14B is a diagram illustrating the time-series date in which label transitions are recorded; In Ranges 0 to 3, the same label "Head" is repeated three times (a region surrounded by a square broken line frame), so that the transition start to the label "Head" is recorded retroactively to Range 0. Similarly, the same label "Upper" is repeated three times in Ranges 200 to 202, so that the transition start to the label "Upper" is recorded in Range 200. In addition, in the preceding Range 199, the transition end of the label, for which the transition start was recorded immediately before, is recorded. For example, in the example of Fig. 14B, the transition end of the label "Head", for which the transition start was recorded immediately before (in Range 0), is recorded in Range 199. Through the similar process, the label "Head" of the transition start is recorded in Range 500, and the label "Upper" of the transition end is recorded in the preceding Range 499.

Fig. 14C indicates an output of Ranges for each label corresponding to Row in the time-series data (Fig. 14B). For example, Ranges 0 to 199, 500 to 602 are labeled "Head", Ranges 200 to 499, 603 to 999, 2000 to 2299 are labeled "Upper", and Ranges 1000 to 1999 are labeled "Lower".

Thus, the subroutine flowchart in Fig. 14A ends, and the process returns to the processes in Fig. 12.

(Steps S31 and S32)

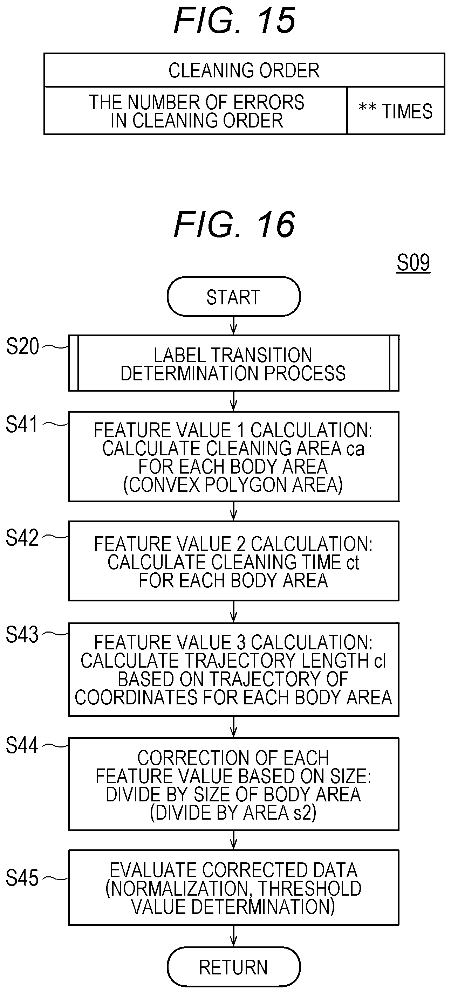

The cleaning analyzer 54 refers to the state transition model stored in the storage 15, to determine the correctness of the cleaning order from Ranges of the labels assigned to the time-series date (see Fig. 14C) acquired through the label transition determination process in step S20. In the example of Fig. 13, a transition from the label "Upper" to "Upper" or "Lower" is a valid state transition, but a transition to "Head" is invalid, that is, the cleaning has been performed in a wrong cleaning order. In the example of Fig. 14C, a plurality of errors in the cleaning order is determined, and the number of order errors is counted. Fig. 15 illustrates an output example of the number of order errors determined by the cleaning analyzer 54.

(S09: Cleaning Degree Determination Process)

Next, step S09 in Fig. 11 will be described. Fig. 16 is a subroutine flowchart illustrating the process in step S09.

(Step S20)

First, the label transition determination process is performed. The processes here are as described with reference to Figs. 14A to 14C.

(Steps S41 to S43)

The cleaning analyzer 54 calculates the following feature values 1 to 3 using Ranges of the labels assigned to the time-series date (see Fig. 14C) and the coordinates of the cleaning member 80 in the Ranges.

(Feature Value 1)

The cleaning analyzer 54 calculates a cleaning area ca for each body area. That is, the smallest convex polygon (convex hull) that includes all the position coordinates of the cleaning member 80 in each body area is obtained, and the area of the convex polygon is obtained. For calculating the convex hull, the Graham Scan or Gift Wrapping Algorithm can be employed. Alternatively, various methods can be used to calculate the area of the convex polygon; for example, by dividing the convex polygon into triangles, calculating the areas of the respective triangles, and summing the areas.

(Feature Value 2)

The cleaning analyzer 54 calculates a cleaning time ct using the cleaning member 80 for each body area. The cleaning analyzer 54 performs the calculation by counting the number of pieces of data (the number of frames) of each body area using the time-series data.

(Feature Value 3)

The cleaning analyzer 54 calculates a movement trajectory length cl for each body area. The cleaning analyzer 54 performs the calculation by calculating a distance (Euclidean distance) between continuous coordinate points of each body area of the time-series data and sums the distances.

(Step S44)

The cleaning analyzer 54 corrects the feature values 1 to 3 based on the size of the physique of the worker. Specifically, the cleaning analyzer 54 divides the feature values 1 to 3 by the individual area s2 of the corrected body areas a1 to a3. In the above-described example, the area s2 of the corrected body area has a size $r^2$ times the area s0 of the reference body area.

(Step S45)

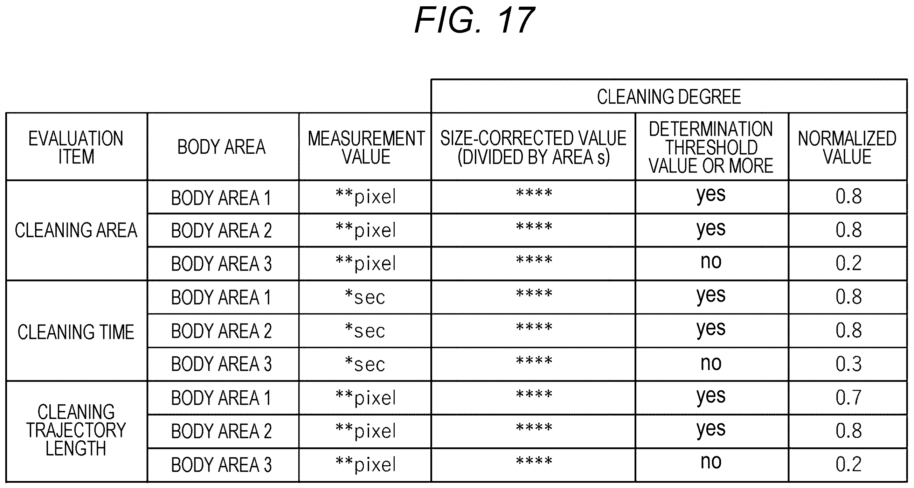

The cleaning analyzer 54 evaluates the corrected feature values 1 to 3. The cleaning analyzer 54 can perform evaluation by the following method. As Method 1, for example, each feature value is compared, for each body area, with a predetermined threshold value for the feature value (a first-type determination threshold value), and when the feature value exceeds the threshold value, it is determined that the cleaning for the body area is completed. As Method 2, the normalization is performed. Specifically, the cleaning analyzer 54 normalizes the corrected feature value using a maximum value and minimum value determined from history data, assigning 1 to the maximum value and 0 to the minimum value. Then, the cleaning analyzer 54 compares the normalized value with a predetermined threshold value (a second-type determination threshold value) to determine the completion of the cleaning for the body area. Here, the history data refers to a data set obtained by a plurality of workers in a manufacturing line in which the information processing system 1000 is used. Fig. 17 is a diagram illustrating an example of an evaluation result of the cleaning degree output by the cleaning analyzer 54. The first-type and second-type determination threshold values may be changed by a user through the setting receiver 114. In this case, the setting receiver 114 functions as a third receiver. Then, the subroutine flowchart in Fig. 16 regarding the cleaning degree determination ends, and the process returns to the processes in Fig. 11.

(Step S10)

The cleaning analyzer 54 performs scoring based on the number of errors in the cleaning order and the normalized value of the cleaning degree. Furthermore, the cleaning analyzer 54 records the determination result and the time-series data in association with a worker ID. The scoring may be performed by simply summing the normalized points, or by weighting the points according to the importance of the body area. Furthermore, in this case, the points corresponding to the number of errors in the cleaning order may be reduced.

(Step S11)

The report output section 113 performs a report output process. Fig. 18A illustrates a first example of a display screen (display screen 131) displayed on the display 13 through the report output process. On the display screen 131, the video captured by the imager 30 is displayed in real time in the display region d11, and a pictogram representing the person is displayed in the display region d12 in a display manner in which the cleaning degree can be visually recognized. The feature value 2 (corrected cleaning time ct (step S44)) is displayed in the display region d12 and d13. In addition, the number of errors in the cleaning order (see Fig. 15) and the total work time or the elapsed time from the work start are displayed in the display region d13. In the display region d12, the pictogram is displayed such that the higher the accomplishment degree (normalized value ranging from 0 to 1) of the cleaning degree for each body area, the darker the color or the density, and the lower the accomplishment degree, the lighter the color or the density. Furthermore, text or a symbol indicating the accomplishment degree may be displayed instead of, or in addition to the color or the density. Note that although the example of Fig. 18A illustrates an example in which the cleaning degree is determined only by the feature value 2 (cleaning time), the controller 11 may also perform determination with respect to the other feature values 1 and 3 (area and trajectory).

Fig. 18B illustrates another example of a display screen (display screen 132) displayed on the display 13 through the report output process performed by the report output section 113. When an error in the cleaning order is detected, the report output section 113 provides a warning to the worker in real time via the display screen 132. On the display screen 132, the fact that there is an error in the cleaning order is displayed in a display region d21, and the physical position of the error is displayed in a display region d22.

Furthermore, the report output section 113 may provide notification that there is an error in the cleaning order, using warning sound from the notifier 14 arranged in the monitoring area. Examples of the warning sound include an announcement indicating the occurrence of the error and a buzzer sound.

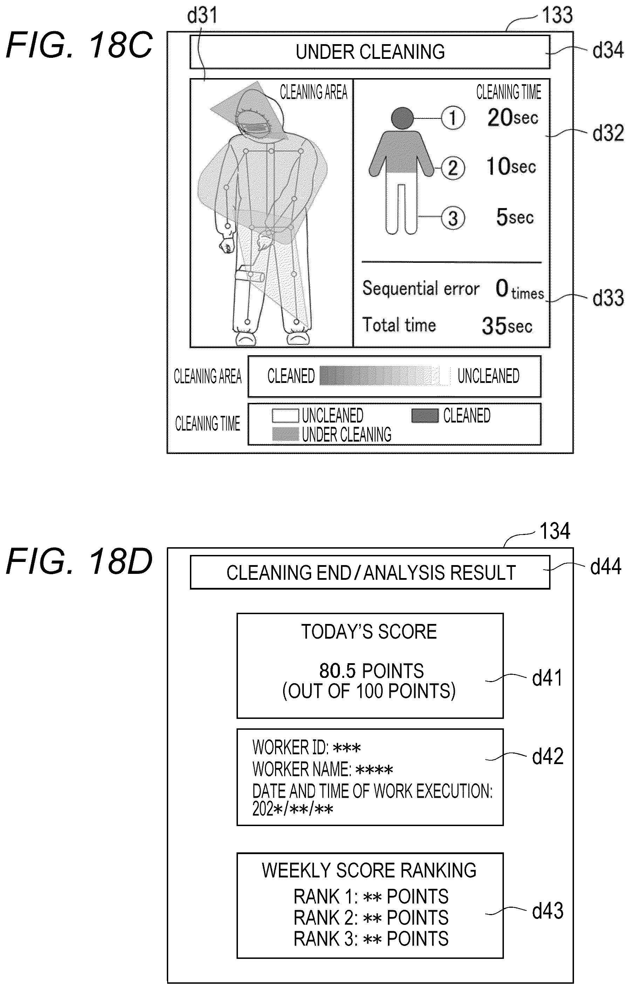

Fig. 18C illustrates still another example of a display screen (display screen 133) displayed on the display 13 through the report output process performed by the report output section 113. On the display screen 133 of Fig. 18C, the detected skeleton information and the determination result of the feature value 1 (area) are displayed, superimposed on the real-time video in a display region d31. As the superimposed determination result, the convex polygon (convex hull) color-coded according to the accomplishment degree of the feature value 1 of each body area is illustrated. Display regions d32 and d33 are similar to those of the display screen 131, and the description thereof will be omitted. In a display region d34, the state of the information processing system 1000 is displayed. In the display region d34, standby state, under cleaning, under analyzing, analysis result, and the like can be displayed as the state of the apparatus. Displaying a screen in which the skeleton and the analysis result are superimposed on the video of the person, such as the display screen 133, allows the worker to know the basis of the analysis, which enables the worker to easily grasp whether the cleaning is correct and how it can be improved.

Fig. 18C illustrates still another example of a display screen (display screen 134) displayed on the display 13 through the report output process performed by the report output section 113. In Fig. 18D, the scoring result determined in step S10 is displayed in a display region d41. In addition, in a display region d42, information on the worker and the date and time (end time) of work execution are displayed, and in a display region d43, higher ranking points in the past for a predetermined period in the manufacturing line are displayed as a reference.

The present embodiment exhibits the following effects with the following configuration.

(1) An information processing system according to the present embodiment includes an imager that captures an image of a predetermined monitoring area, and a detector that detects a person and a cleaning member from a video captured by the imager. In addition, the information processing system includes a determiner that determines, based on a plurality of body areas set according to a size of the person detected by the detector and a position of the cleaning member within the body areas, an order of cleaning work performed by the person and a cleaning degree. With this configuration, it is possible to appropriately determine the cleaning work performed by the worker themselves using the cleaning member.

(2) In addition, the determiner acquires skeleton information of the person, and the determiner sets, based on the skeletal information, the plurality of body areas corresponding to body parts, each having a size corresponding to the size of the person. With this configuration, it is possible to appropriately determine whether the cleaning work is being appropriately performed in consideration of the body size of the worker. For example, when the worker has a large physique, the size of the body part to be cleaned is larger than that of a smaller worker, so that the worker is required to perform the cleaning work over a wider range or for a longer time than the small worker.

(3) In addition, among the plurality of body areas, adjacent body areas are set to overlap each other within a certain range. In addition, in a case where the position of the cleaning member continuously remains in any of the body areas for a predetermined period of time or longer, the determiner determines that the body area is under cleaning. In addition, the determiner does not determine that a state transition has occurred in a case where the cleaning member is present within the overlapping range of the body areas. Accordingly, it is possible to correctly determine the cleaning order. For example, in a case where the cleaning member enters the area around the waist during both the upper-body and lower-body cleaning motions, it is possible to appropriately prevent the false determination of the cleaning order in advance and to appropriately determine the cleaning order.

The configuration of the information processing system 1000 described above is merely a main configuration for describing the features of the embodiment, and is not limited to the above configuration, and can be modified in various ways within the scope of the claims. In addition, a configuration included in a general image forming apparatus is not excluded.

The number of body areas and the cleaning order (state transition model) are set according to a manual and the like related to the cleaning work in the manufacturing line to which the information processing system is applied, and can be changed as appropriate. For example, the number of body areas is not limited to three, and the body area may be divided into more than three. Although in the example illustrated in Fig. 1 and the like, the information processing system 1000 includes two of the first and second information processing apparatuses, these apparatuses may be integrated. Although the present embodiment illustrates the example in which the imager 30 includes one camera that captures the front side of the worker 90, the present invention is not limited to the example. A camera may also be installed on the opposite side in the monitoring area so that the back part of the worker can be captured at the same time. In this case, the camera used for the determination is switched depending on the position of the cleaning member.

Although in the present embodiment, the determiner 112 determines the feature values 1 to 3, some of the feature values may be omitted without determining all of the feature values. For example, the feature value 3 may be omitted and only the feature values 1 and 2 may be used. Furthermore, although the example in which the feature values 1 to 3 are each divided by the area s2 of the corrected body area has been described, but the feature values 2 and 3 (time and trajectory length) may be divided by the value of the area s2 raised to the power of 1/2.

In addition, means and methods for performing the various processes in the information processing system 1000 according to the above-described embodiment can be implemented by any of a dedicated hardware circuit and a programmed computer. The program may be provided by, for example, a computer-readable recording medium such as a USB memory or a digital versatile disc (DVD)-ROM, or may be provided online via a network such as the Internet. In this case, the program recorded on the computer-readable recording medium is usually transferred to and stored in a storage such as a hard disk. In addition, the program may be provided as independent application software or may be incorporated into software of an apparatus as one function of the apparatus.

Although the embodiment of the present invention has been described and illustrated in detail, the disclosed embodiment has been created for a purpose of illustration and example only, and not limitation. The scope of the present invention is to be interpreted by the wording of the appended claims.

**Claims**

1. An information processing system (1000) comprising:

   an imager (30) that captures an image of a predetermined monitoring area;
   a detector (21) that detects a person and a cleaning member from a video captured by the imager; and
   a determiner (112) that determines, based on a plurality of body areas (a1, a2, a3) set according to a size of the person detected by the detector and a position of the cleaning member within the body areas, an order of cleaning work performed by the person and a cleaning degree.

2. The information processing system according to claim 1, wherein

   the detector acquires skeleton information of the person, and
   the determiner sets, based on the skeletal information, the plurality of body areas corresponding to body parts, each having a size corresponding to the size of the person.

3. The information processing system according to claim 2, wherein

   in each of the body areas, a reference size having a predetermined size is set for each of the body parts,
   the reference size is changed based on a ratio of a length between positions of predetermined pieces of the skeleton information to a reference length, and the body area is set according to a size after change, and
   the body area after the change is arranged according to the positions of the predetermined pieces of the skeleton information.

4. The information processing system according to claim 3, comprising a first receiver (114) that receives setting change, by a user, of the reference size for each of the body parts and an arrangement position with respect to positions of pieces of the skeleton information.

5. The information processing system according to claim 1, wherein the determiner determines the cleaning degree based on a movement time and a movement trajectory of the cleaning member within the body areas.

6. The information processing system according to claim 1, comprising a report section (113) that reports a determination result determined by the determiner.

7. The information processing system according to claim 2, wherein among the plurality of body areas, adjacent body areas are set to overlap each other within a certain range.

8. The information processing system according to claim 7, wherein in a case where a position of the cleaning member continuously remains in any of the body areas for a predetermined period of time or longer, the determiner determines that the body area is under cleaning.

9. The information processing system according to claim 7, wherein

   the information processing system includes a state transition model indicating a correct cleaning order for the plurality of body areas, and
   the determiner determines the order of the cleaning work based on the position of the cleaning member within the body areas using the state transition model.

10. The information processing system according to claim 9, wherein, in a case where the position of the cleaning member continuously remains in any of the body areas for a predetermined period of time or longer, the determiner determines, in the state transition model, that a state has transitioned to being under cleaning of the body area.

11. The information processing system according to claim 10, wherein, in a case where a state transitions in a direction set as an error in the state transition model, the determiner detects an order error and counts the number of errors.

12. The information processing system according to claim 11, wherein the determiner does not determine that a transition of the state has occurred in a case where the cleaning member is present within the overlapping range of the body areas.

13. The information processing system according to claim 11 comprising a second receiver (114) that receives setting change, by a user, of correctness determination for a transition direction between states in the state transition model.

14. The information processing system according to claim 1, wherein

the detector acquires the skeleton information of the person, and
the determiner determines start and end of the cleaning work in a case where it is determined that the motion of the person is a gesture registered in advance, based on the skeleton information.

15. The information processing system according to claim 3, comprising

a storage (22) that stores time-series data from start to end of the cleaning work in which position information of the cleaning member, a classification result of the body areas determined based on the position information, and a timestamp are associated with each other, wherein
the determiner includes an analyzer that calculates a feature value for determining the cleaning degree for each of the body areas using the time-series data that has been stored.

## FIG. 1

1000

**30** IMAGER

**10** FIRST INFORMATION PROCESSING APPARATUS

- **11** CONTROLLER
- **12** INPUT SECTION
- **13** DISPLAY
- **14** NOTIFIER
- **15** STORAGE
  - BODY AREA REFERENCE SIZE
  - TIME-SERIES DATA
  - HISTORY DATA
  - STATE TRANSITION MODEL
  - TRIGGER CONDITION
- **16** COMMUNICATOR

**20** SECOND INFORMATION PROCESSING APPARATUS

- **21** CONTROLLER
- **22** STORAGE
- **23** COMMUNICATOR

EP 4 730 285 A1

# FIG. 2

## FIG. 3

IMAGER 30

CONTROLLER (FIRST INFORMATION PROCESSING APPARATUS) 11

VIDEO DATA

IMAGE ACQUIRER 111

VIDEO DATA → CONTROLLER (SECOND INFORMATION PROCESSING APPARATUS) 21

DETERMINER 112

VIDEO DATA

SKELETON INFORMATION, CLEANING MEMBER INFORMATION

BODY AREA SETTER 51

CORRECTION INFORMATION

SKELETON INFORMATION

SKELETON DETECTOR 211

CLEANING MEMBER DETECTOR 212

CLEANING PART IDENTIFIER 52

BODY AREA

LABEL ASSIGNMENT

CLEANING ANALYZER 54

SIZE CORRECTOR 53

CORRECTION INFORMATION

REPORT OUTPUT SECTION 113

SETTING RECEIVER 114

DISPLAY 13

NOTIFIER 14

EP 4 730 285 A1

## FIG. 4A

## FIG. 4B

*FIG. 5A* REFERENCE SIZE (r=1.0)

w2

w1

dy

a1: Head
(AREA s0_1)

OVERLAPPING
REGION

a2: Upper
(AREA s0_2)

OVERLAPPING
REGION

a3: Lower
(AREA s0_3)

*FIG. 5B* LARGE SIZE (r=1.1, AREA s2=1.21×s0)

a1: Head
(AREA s2_1)

a2: Upper
(AREA s2_2)

a3: Lower
(AREA s2_3)

# FIG. 6A

UPPER-BODY (Upper) CLEANING MOTION

# FIG. 6B

LOWER-BODY (Lower) CLEANING MOTION

# FIG. 7

VIDEO DATA

BINARIZATION,
CONTOUR EXTRACTION

CENTROID COORDINATES
CALCULATION

80

# FIG. 8

80

RIGHT
FIST

LEFT
FIST

ROI_1 (RIGHT FIST),
PREVIOUS FRAME
COORDINATES

ROI_2 (LEFT FIST)

CLEANING MEMBER
(CENTROID POSITION)

# FIG. 9

a1: Head

a2: Upper

a3: Lower

| Head |
| Head and Upper |
| Upper and Lower |

80

# FIG. 10

| Row (TIME) | time | CLEANING MEMBER | | LABEL |
|---|---|---|---|---|
| | | X COORDINATE | Y COORDINATE | |
| 0 | 0.000 | 362.3047 | 64.25781 | Head |
| 1 | 0.033 | 362.3047 | 64.25781 | Head |
| 2 | 0.067 | 362.3047 | 64.25781 | Head |
| 3 | 0.100 | 362.3047 | 62.89063 | Head |
| 4 | 0.133 | ** | ** | ** |
| ... | ... | ... | ... | ... |
| 816 | 27.200 | 448.4375 | 225.586 | Head and Upper |
| 817 | 27.233 | 445.7031 | 218.750 | Head and Upper |
| 818 | 27.267 | ** | ** | ** |

*FIG. 11*

```
                    ┌──────────┐
                    │  START   │
                    └────┬─────┘
                         ↓
S01 ──┌────────────────────────────────┐
      │        ACQUIRE VIDEO            │
      └────────────────┬───────────────┘
                       ↓ ←───────────────────┐
S02 ~   ◇ CLEANING WORK START TRIGGER? ◇  NO │
                       │ YES
                       ↓ ←──────────────  (10)
S03 ──┌────────────────────────────────┐
      │        DETECT SKELETON          │
      └────────────────┬───────────────┘
                       ↓
S04 ──┌────────────────────────────────┐
      │   DETECT POSITION OF            │
      │   CLEANING MEMBER               │
      └────────────────┬───────────────┘
                       ↓
S05 ──┌────────────────────────────────┐
      │ BODY AREA SIZE CORRECTION:      │
      │ ADJUST BODY AREA SIZE USING     │
      │ CORRECTION COEFFICIENT r        │
      │ CALCULATED BASED ON POSITION    │
      │ COORDINATES OF JOINT POINTS     │
      └────────────────┬───────────────┘
                       ↓
S06 ──┌────────────────────────────────┐
      │ DETERMINE ENTRY INTO PLURALITY  │
      │ OF BODY AREAS BASED ON          │
      │ POSITION OF CLEANING MEMBER     │
      └────────────────┬───────────────┘
                       ↓
S07 ──┌────────────────────────────────┐
      │ RECORD TIME-SERIES DATA         │
      │ (TIMESTAMP, POSITION COORDINATES,│
      │ BODY AREA CLASSIFICATION LABEL) │
      └────────────────┬───────────────┘
                       ↓
S08 ──┌──────────────────────┐   ┌──────────────────────┐ ── S09
      │ CLEANING ORDER        │   │ CLEANING DEGREE       │
      │ DETERMINATION PROCESS │   │ DETERMINATION PROCESS │
      └──────────┬───────────┘   └──────────┬───────────┘
                 ↓ ←──────────────────────────┘
S10 ──┌────────────────────────────────┐
      │   SCORING, RECORDING PROCESS    │
      └────────────────┬───────────────┘
                       ↓
S11 ──┌────────────────────────────────┐
      │     REPORT OUTPUT PROCESS       │
      └────────────────┬───────────────┘
                       ↓
S12 ~   ◇ CLEANING WORK END TRIGGER? ◇  NO → (10)
                       │ YES
                       ↓
                    ┌──────────┐
                    │   END    │
                    └──────────┘
```

## FIG. 12

```
        ┌─────────────┐         S08
        │    START    │
        └─────────────┘
               │
               ▼
S20 ─┌─────────────────────────┐
     │   LABEL TRANSITION       │
     │   DETERMINATION PROCESS  │
     └─────────────────────────┘
               │
               ▼
S31 ─┌─────────────────────────┐
     │ REFER TO STATE TRANSITION MODEL │
     └─────────────────────────┘
               │
               ▼
S32 ─┌─────────────────────────┐
     │ DETERMINE CORRECTNESS OF STATE │
     │ TRANSITION BASED ON RECORD OF  │
     │ LABEL TRANSITION, AND COUNT    │
     │ THE NUMBER OF TRANSITIONS      │
     │ IN WRONG DIRECTION             │
     └─────────────────────────┘
               │
               ▼
        ┌─────────────┐
        │    RETURN   │
        └─────────────┘
```

## FIG. 13

# FIG. 14A

S20

START

S201 — ACQUIRE TIME-SERIES DATA
(DATA LENGTH n)

S202 — LOOP START
i=0 TO n−1

S203 — IS LABEL
OVERLAPPING LABEL
OR NaN? — YES

NO

S204 — IS SAME
LABEL REPEATED N
OR MORE CONSECUTIVE
TIMES? — NO

YES

S205 — RECORD LABEL TRANSITION
(RECORD END OF PREVIOUS LABEL /
START OF CURRENT LABEL)

S206 — next i
LOOP

RETURN

# FIG. 14B

| Row (TIME) | CLEANING MEMBER | | LABEL | TRANSITION LABEL START/END |
| | X COORDINATE | Y COORDINATE | | |
|---|---|---|---|---|
| **0** | *** | *** | Head | **Head** |
| 1 | *** | *** | Head | — |
| 2 | *** | *** | Head | — |
| ... | ... | ... | ... | ... |
| 198 | *** | *** | Head and Upper | — |
| **199** | *** | *** | Head and Upper | Head |
| **200** | *** | *** | Upper | **Upper** |
| 201 | *** | *** | Upper | — |
| 202 | *** | *** | Upper | — |
| 203 | *** | *** | Upper | — |
| ... | ... | ... | ... | ... |
| **498** | *** | *** | Head and Upper | |
| **499** | *** | *** | Head and Upper | Upper |
| **500** | *** | *** | Head | **Head** |
| 501 | *** | *** | Head | — |
| 502 | *** | *** | Head | — |
| 503 | *** | *** | Head | — |
| ... | ... | ... | ... | ... |

DETERMINATION OF THREE CONSECUTIVE REPETITIONS

# FIG. 14C

ranges = {'Head': [(0, 199),(500, 602)],
'Upper': [(200, 499),(603,999),(2000, 2299)],
'Lower': [(1000, 1999)]}

# FIG. 15

| CLEANING ORDER | |
|---|---|
| THE NUMBER OF ERRORS IN CLEANING ORDER | ** TIMES |

# FIG. 16

S09

START

S20 — LABEL TRANSITION DETERMINATION PROCESS

S41 — FEATURE VALUE 1 CALCULATION: CALCULATE CLEANING AREA ca FOR EACH BODY AREA (CONVEX POLYGON AREA)

S42 — FEATURE VALUE 2 CALCULATION: CALCULATE CLEANING TIME ct FOR EACH BODY AREA

S43 — FEATURE VALUE 3 CALCULATION: CALCULATE TRAJECTORY LENGTH cl BASED ON TRAJECTORY OF COORDINATES FOR EACH BODY AREA

S44 — CORRECTION OF EACH FEATURE VALUE BASED ON SIZE: DIVIDE BY SIZE OF BODY AREA (DIVIDE BY AREA s2)

S45 — EVALUATE CORRECTED DATA (NORMALIZATION, THRESHOLD VALUE DETERMINATION)

RETURN

## FIG. 17

| EVALUATION ITEM | BODY AREA | MEASUREMENT VALUE | CLEANING DEGREE | | |
|---|---|---|---|---|---|
| | | | SIZE-CORRECTED VALUE (DIVIDED BY AREA s) | DETERMINATION THRESHOLD VALUE OR MORE | NORMALIZED VALUE |
| CLEANING AREA | BODY AREA 1 | **pixel | **** | yes | 0.8 |
| | BODY AREA 2 | **pixel | **** | yes | 0.8 |
| | BODY AREA 3 | **pixel | **** | no | 0.2 |
| CLEANING TIME | BODY AREA 1 | *sec | **** | yes | 0.8 |
| | BODY AREA 2 | *sec | **** | yes | 0.8 |
| | BODY AREA 3 | *sec | **** | no | 0.3 |
| CLEANING TRAJECTORY LENGTH | BODY AREA 1 | **pixel | **** | yes | 0.7 |
| | BODY AREA 2 | **pixel | **** | yes | 0.8 |
| | BODY AREA 3 | **pixel | **** | no | 0.2 |

*FIG. 18A*

d11  d12  131

① 20sec
② 2sec
③ 0sec

Sequential error   0times   d13
Total time   22sec

UNCLEANED   CLEANED
UNDER CLEANING

*FIG. 18B*

d21  d22  132

① 20sec
② 10sec
③ 5sec

The order is wrong

Sequential error   1times   d23
Total time   35sec

UNCLEANED   CLEANED
UNDER CLEANING   CLEANING ORDER ERROR

**FIG. 18C**

133

d31

d34 — UNDER CLEANING

CLEANING AREA

CLEANING TIME

d32
① 20sec
② 10sec
③ 5sec

Sequential error  0 times
Total time  35sec

d33

| CLEANING AREA | CLEANED ▓▓▓▓▓ UNCLEANED |
| CLEANING TIME | ☐ UNCLEANED ▓ CLEANED ▓ UNDER CLEANING |

**FIG. 18D**

134

d44 — CLEANING END / ANALYSIS RESULT

TODAY'S SCORE

80.5 POINTS
(OUT OF 100 POINTS)

d41

WORKER ID: ✳✳✳
WORKER NAME: ✳✳✳✳
DATE AND TIME OF WORK EXECUTION:
202✳/✳✳/✳✳

d42

WEEKLY SCORE RANKING
RANK 1: ✳✳ POINTS
RANK 2: ✳✳ POINTS
RANK 3: ✳✳ POINTS

d43

Europäisches
Patentamt

European
Patent Office

Office européen
des brevets

# EUROPEAN SEARCH REPORT

**Application Number**

EP 25 19 9103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2021 152758 A (DAINIPPON PRINTING CO LTD) 30 September 2021 (2021-09-30) * paragraphs [0020], [0018], [0019], [0022], [0025] - [0029], [0031], [0032], [0034]; figures 5,6,7 * * paragraphs [0043], [0046], [0049], [0051] * ----- | 1-15 | INV. G06V40/20 |
| A | JP 2024 047930 A (AVILEN INC) 8 April 2024 (2024-04-08) * paragraphs [0006], [0009], [0038] - [0043]; figure 2 * ----- | 1-15 | |
| A | SONG SIJIE ET AL: "Learning to Recognize Human Actions From Noisy Skeleton Data Via Noise Adaptation", IEEE TRANSACTIONS ON MULTIMEDIA, IEEE, USA, vol. 24, 15 October 2021 (2021-10-15), pages 1152-1163, XP011901908, ISSN: 1520-9210, DOI: 10.1109/TMM.2021.3120631 [retrieved on 2022-03-03] * Section I, II A; figure 1 * ----- | 1-15 | |

| | TECHNICAL FIELDS SEARCHED (IPC) |
|---|---|
| | G06V |

The present search report has been drawn up for all claims

| Place of search | Date of completion of the search | Examiner |
|---|---|---|
| The Hague | 17 December 2025 | Meurisse, Wim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 25 19 9103

17-12-2025

| Patent document cited in search report | Publication date | Patent family member(s) | Publication date |
|---|---|---|---|
| JP 2021152758 A | 30-09-2021 | JP 7463792 B2<br>JP 2021152758 A | 09-04-2024<br>30-09-2021 |
| JP 2024047930 A | 08-04-2024 | JP 7271777 B1<br>JP 2024047930 A | 11-05-2023<br>08-04-2024 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024184924 A
- JP 2021152758 A
- JP 2018005464 A